(19) Europäisches Patentamt
European Patent Office
Office européen des brevets

(11) Publication number: **0 090 119**
**B1**

(12) # EUROPEAN PATENT SPECIFICATION

(45) Date of publication of patent specification: **09.03.88**

(51) Int. Cl.$^4$: **C 22 B 19/26,** C 22 B 3/00

(21) Application number: **82306778.0**

(22) Date of filing: **20.12.82**

(54) **Selectively stripping iron ions from an organic solvent.**

(30) Priority: **25.03.82 JP 46261/82**
**10.08.82 JP 137954/82**

(43) Date of publication of application:
**05.10.83 Bulletin 83/40**

(45) Publication of the grant of the patent:
**09.03.88 Bulletin 88/10**

(84) Designated Contracting States:
**DE FR GB IT SE**

(56) References cited:
**EP-A-0 046 973**
**AU-B- 487 596**
**DE-A-2 601 471**
**DE-A-3 002 830**
**US-A-3 966 569**
**US-A-4 235 713**

(73) Proprietor: **Solex Research Corporation of Japan**
**23-9, Maruyama-cho**
**Shibuya-ku Tokyo (JP)**

(72) Inventor: **Watanabe, Morio**
**8-23-22, Minamitsukaguchi-cho**
**Amagasaki-shi Hyogo-ken (JP)**
Inventor: **Nishimura, Sanji**
**13-8, Fukakusa Nanmei-cho Fushimi-ku**
**Kyoto-shi Kyoto-fu (JP)**

(74) Representative: **Brewer, Leonard Stuart et al**
**SANDERSON & CO. European Patent Attorneys**
**34, East Stockwell Street**
**Colchester Essex CO1 1ST (GB)**

**EP 0 090 119 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Various materials containing zinc are discharged in the iron and steel industry and nonferrous metal industry. However, most of them are discarded because of their low contents of zinc and higher contents of iron in comparison with the zinc content, and consequently many problems of public health protection exist.

In the iron and steel industry, these materials are produced mainly in dust collectors treating exhaust gas from high temperature portions of blast furnaces, converters and electric furnaces, etc. In process industries, these materials are produced mainly when scums formed in upper and lower parts of fused zinc galvanizing tanks and fine dusts generated from the total surface thereof are treated, and in dust collectors treating exhaust gas from scrap-treating typically represented by junk car scrapping. In the nonferrous metal industry, these materials are produced from the processing of leached residues in hydrometallurgical refining processes, sludges in solution purifying processes, slags and exhaust gas in pyrometallurgical processes. However, valuable metals such as zinc, etc. cannot be recovered from these materials due to the high content of iron, and these materials have long been discarded and wasted.

When the iron and zinc ions are in an aqueous solution, it is known to separate them by forming and removing iron hydroxide by controlling the pH, but this method has the disadvantage that zinc recovery is decreased by the large amount of zinc which coprecipitates with the iron hydroxide. Although the solid raw materials containing iron and zinc can be dissolved by acids, economical zinc recovery is very difficult due to coprecipitation of zinc with iron, and consequently these materials have been discarded.

The Norwegian Institute of Technology has proposed a zinc recovery process for the separation of zinc and iron from raw materials containing them without using acid. According to this process, ZnO in the raw materials is selectively leached in contact with an organic solvent containing Versatic acid.

$$\underset{(Solid)}{ZnO} + \underset{(Org)}{2RH} \rightleftharpoons \underset{(Org)}{R_2Zn} + \underset{(Aq)}{H_2O}$$

In addition, a process for recovering organic solvents remaining in large amounts in leached residues has been proposed in which the residues are washed with an aqueous solution containing NaOH and $Na_2CO_3$ and then with hot water. In this process, however, the residues containing the organic solvent are massive, and consequently it is very difficult to recover the adhering organic solvents from the residues.

Typical samples of zinc-containing raw materials discharged from the iron and steel industry are shown below.

| | Fe | Zn | Pb | Ca | Na | $Al_2O_3$ | $SiO_2$ | C |
|---|---|---|---|---|---|---|---|---|
| Electric furnace dust: | 31.8 | 18.4 | 3.1 | 2.5 | 1.9 | 0.83 | 4.8 | 11.5 |
| Blast furnace dust: | 35.2 | 1.6 | 0.3 | 3.7 | — | 2.3 | 5.4 | 33.4 |

(in %)

As can be understood from the above, a leaching process with an organic solvent containing Versatic acid is not economical for treating the materials, because of their low contents of zinc and large amounts of $ZnO \cdot Fe_2O_3$, particularly in electric furnace dusts, and a large loss of organic solvent which remains adhering in the leached residues. The present inventors proposed a process for recovery of organic solvents adhering in residues, in which the residue is washed with isopropyl alcohol and acetone and then the organic solvent is recovered by fractional distillation. However, this process could not be used industrially owing to its complexity and high recovery cost.

In addition, a process is known in which iron-making raw materials and raw materials containing large amounts of zinc are recovered from raw materials of low zinc content, such as blast furnace dust, by heating at 400—1600°C in a reducing atmosphere and volatilizing zinc, and this process has been commercially adopted. The economical advantage of the process has been decreased, however, by the extraordinary increase in the price of heating fuels.

For these and other reasons, raw materials containing less than 50% zinc are not accepted by nonferrous smelters due to the economical disadvantages and are at present discarded.

The present invention provides a resource cycle system for treating economically liquid or solid raw materials which contain relatively higher contents of iron in comparison with their zinc content and which cannot be treated economically by conventional methods.

The invention provides a process for selectively stripping $Fe^{3+}$ ions into an aqueous phase from an organic solvent (A), which process comprises bringing an organic solvent (A) containing one or more compounds selected from the group consisting of alkyl phosphoric acid, alkyl-aryl phosphoric acid, alkyl thio phosphoric acid and alkyl-aryl thio phosphoric acid together with a petroleum hydrocarbon as a diluent and $Fe^{3+}$ and zinc ions into contact with an aqueous solution containing $NH_4^+$ and $F^-$ ions. The $Fe^{3+}$ and zinc ions have usually been extracted into the organic solvent.

The invention also provides a process for treating solid raw material containing mainly iron and zinc, which process comprises:

(a) a 1st step of dissolving solid raw material containing mainly iron and zinc with acidic aqueous solution;

(b) a 2nd step of selectively extracting $Fe^{3+}$ ions from the acidic aqueous solution which contains them and which contains mainly $Fe^{3+}$ and zinc ions by contacting the solution with an organic solvent (A) containing one or more compounds selected from the group consisting of alkyl phosphoric acid, alkyl-aryl phosphoric acid, alkyl thio phosphoric acid and alkyl-aryl thio phosphoric acid together with a petroleum hydrocarbon as a diluent, such that $Fe^{3+}$ and zinc ions are extracted into the organic solvent (A);

(c) a 3rd step of selectively stripping $Fe^{3+}$ ions from the organic solvent (A) containing the $Fe^{3+}$ and zinc ions by contacting it with an aqueous solution containing $NH_4^+$ and $F^-$ ions; and

(d) a 4th step of recycling aqueous solution resulting from the 2nd step back to the 1st step. If the dissolved iron from the 1st step is not already present as $Fe^{3+}$ ions, then dissolved iron is converted to $Fe^{3+}$ ions before the 2nd step. In the 4th step, usually most of the aqueous solution resulting from the 2nd step is recycled.

The invention also provides a process for recovering zinc in the form of metallic zinc, zinc oxide, zinc chloride, zinc sulphate or zinc nitrate from a solid raw material containing zinc and iron, which process comprises:

(a) a 1st step of leaching the solid raw material with an organic solvent (B) comprising (i) one or more compounds selected from the group consisting of carboxylic acids together with (ii) a petroleum hydrocarbon as a diluent;

(b) a 2nd step of recovering organic solvent (B) remaining in the leached residue from the 1st step by dissolution with an aqueous solution containing one or more acids selected from the group consisting of HCl, $H_2SO_4$ and $HNO_3$;

(b') if dissolved iron in the aqueous solution which results from the 2nd step is not already present as $Fe^{3+}$ ions, converting dissolved iron to $Fe^{3+}$ ions;

(c) a 3rd step of selectively extracting $Fe^{3+}$ ions from the aqueous solution which contains them and which contains mainly $Fe^{3+}$ and zinc ions by contacting the solution with an organic solvent (A) containing one or more compounds selected from the group consisting of alkyl phosphoric acid, alkyl-aryl phosphoric acid, alkyl thio phosphoric acid and alkyl-aryl thio phosphoric acid together with a petroleum hydrocarbon as a diluent, such that $Fe^{3+}$ and zinc ions are extracted into the organic solvent (A);

(d) a 4th step of selectively stripping $Fe^{3+}$ ions from the organic solvent (A) containing the $Fe^{3+}$ and zinc ions by contacting it with an aqueous solution containing $NH_4^+$ and $F^-$ ions; and

(e) a 5th step of regenerating organic solvent (B) from the organic solvent (B) containing zinc which results from the 1st step, by contacting the organic solvent (B) containing zinc with an aqueous solution containing HCl, $H_2SO_4$, $HNO_3$ or $NH_4^+$ and $F^-$ ions.

EP—A—046973 discloses a process for producing high-purity iron oxide comprising:

a step of contacting an iron ions-containing organic solution containing one or more compounds selected from the group consisting of alkyl phosphoric acids, alkyl and aryl dithio phosphoric acids, carboxylic acids and hydroxyoximes and a petroleum hydrocarbon as a diluent with an aqueous solution containing one or more compounds selected from the group consisting of HF, $NH_4HF_2$ and $NH_4F$ to obtain ammonium iron fluoride or iron fluoride; and

a step of heating the ammonium iron fluoride or iron fluoride obtained in a gas atmosphere containing oxygen or water. Among advantages listed for its invention, the specification includes the advantage that removal of iron in non-ferrous extractive hydrometallurgy can be economically carried out and recovery efficiency can be enhanced by controlling loss of other co-existing metals.

According to the present invention, the organic solvent (A) can coextract both $Fe^{3+}$ and zinc ions or most of the $Fe^{3+}$ ions and a small amount of the zinc ions from an aqueous solution containing $Fe^{3+}$ and zinc ions. The $Fe^{3+}$ ions extracted therein can be stripped selectively from the organic solvent by contact with an aqueous solution containing $NH_4^+$ and $F^-$ ions. The zinc ions in the organic solvent are not stripped regardless of the contact time with the aqueous solution containing $NH_4^+$ and $F^-$ ions, concentrations of $NH_4^+$ and $F^-$ ions and pH values, and consequently can be separated from the $Fe^{3+}$ ions. The resultant organic solvent containing only zinc ions can be recycled to the extraction process for the extraction of solely iron ions from the aqueous solution containing iron and zinc ions.

Since zinc ions of low extraction distribution ratio can be transferred from an organic phase to an aqueous phase according to an increased amount of extracted $Fe^{3+}$ ions having a higher extraction distribution ratio, loss of zinc ions can be avoided and solely iron ions can be extracted and recovered from the aqueous phase. Accordingly, this process is useful for the removal of only $Fe^{3+}$ ions without loss of zinc ions and other valuable metal ions from metal plating solutions, such as zinc galvanizing solutions.

Where zinc is to be recovered from solid raw materials containing zinc and iron, an aqueous solution containing mainly iron and zinc ions is obtained by dissolution of solid raw materials containing zinc and iron with acid, the iron ions therein are converted to $Fe^{3+}$ ions by oxygen aeration, oxidation with chemicals such as $H_2O_2$, etc. or electro-oxidation, and then $Fe^{3+}$ ions are extracted and removed from a strong acid region by contact with the organic solvent (A) containing one or more compounds selected from the group consisting of alkyl phosphoric acid, alkyl-aryl phosphoric acid, alkyl thio phosphoric acid and alkyl-aryl thio

phosphoric acid together with a petroleum hydrocarbon as a diluent. In this way, the acid consumed in dissolving the iron contained in the solid raw materials can be recovered and recycled to the dissolution treatment of the raw materials.

This fact indicates that iron alone can be separated and recovered from other metals without consumption of acid or alkali, so that low iron contents do not cause economic disadvantages. Thus, metal values can be recovered economically from various industrial wastes. $HNO_3$ or an aqueous solution containing $HNO_3 + H_2SO_4$ or $HNO_3 + HCl$ can be used for the dissolution of raw materials in order to omit the step of oxidation of iron ions in the aqueous solution after the dissolution treatment of the raw materials.

Since $Fe^{3+}$ ions can be extracted and removed by the organic solvent (A) from the region of strong acid such as a nitric acid solution or a mixed solution containing $HNO_3 + H_2SO_4$ or $HNO_3 + HCl$, the acid after removal of the $Fe^{3+}$ ions can be recycled to dissolve raw materials.

Where the amount of metal ions other than iron ions, such as zinc ions, increases, at least stoichiometric amounts of $H_2SO_4$ or HCl with respect to the contained metal ions can be added in a well known $HNO_3$ recovery process, and the $NHO_3$ in the aqueous solution extracted and removed by an organic solvent containing phosphoric acid ester and the contained metal salts converted to the corresponding metal sulphate or metal chloride as shown in the following equations in which TBP means tributyl phosphate:

$$\underset{(Aq)}{Zn(NO_3)_2} + \underset{(Aq)}{2HCl} + \underset{(Org)}{2TBP} \rightleftarrows \underset{(Org)}{2TBP.HNO_3} + \underset{(Aq)}{ZnCl_2} \quad (1)$$

$$\underset{(Aq)}{Zn(NO_3)_2} + \underset{(Aq)}{H_2SO_4}\underset{(Org)}{2TBP} \rightleftarrows \underset{(Org)}{2TBP.HNO_3}\underset{(Aq)}{ZnSO_4} \quad (2)$$

Nitric acid extracted into the organic phase can be stripped and recovered to an aqueous phase by contact with water, and can be used to dissolve raw materials.

When treating solid raw materials containing ZnO, the zinc oxide in the solid raw material can be extracted into an organic phase by contact with an organic solvent (B) comprising one or more compounds selected from the group of carboxylic acids together with a petroleum hydrocarbon as a diluent at a first stage as shown in the following equation:

$$\underset{(Solid)}{ZnO} + \underset{(Org)}{2RH} \rightleftarrows \underset{(Org)}{R_2Zn} + \underset{(Aq)}{H_2O} \quad (3)$$

As a large amount of the organic solvent (B) remains adhering to the leached residue discharged from the first stage, this process does not become economical unless the adhering organic solvent can be recovered and the raw materials contain large amounts of ZnO.

In a second stage, the organic solvent (B) can be recovered by dissolution of the residue with an aqueous solution containing one or more acids selected from HCl, $H_2SO_4$ and $HNO_3$. Since the residue undissolved by the acid is generally under 15% of the raw materials prior to the leaching first stage, loss of the organic solvent (B) by adhesion is very small.

As the dissolution solution which results from the second stage contains mainly iron and zinc ions, and $Fe^{3+}$ ions can be extracted selectively therefrom by contact with the organic solvent (A), HCl, $H_2SO_4$ and $HNO_3$ used for the dissolution of iron can be recovered in a third stage as shown in the following equations:

$$\underset{(Aq)}{FeCl_3} + \underset{(Org)}{3RH} \rightleftarrows \underset{(Org)}{R_3Fe} + \underset{(Aq)}{3HCl} \quad (4)$$

$$\underset{(Aq)}{Fe(NO_3)_3} + \underset{(Org)}{3RH} \rightleftarrows \underset{(Org)}{R_3Fe} + \underset{(Aq)}{3HNO_3} \quad (5)$$

$$\underset{(Aq)}{1/2\ Fe_2(SO_4)_3} + \underset{(Org)}{3RH} \rightleftarrows \underset{(Org)}{R_3Fe} + \underset{(Aq)}{3/2\ H_2SO_4} \quad (6)$$

where RH indicates an extractant having an H type-exchange radical.

The $Fe^{3+}$ ions extracted into the organic solvent (A) can be stripped by an aqueous solution containing $NH_4^+$ and $F^-$ ions and the organic solvent (A) regenerated as shown in the following equation:

$$\underset{(Org)}{R_3Fe} + \underset{(Aq)}{3NH_4HF_2} \rightleftarrows \underset{(Org)}{3RH} + \underset{(Solid)}{(NH_4)_3FeF_6\downarrow} \quad (7)$$

The acids (HCl, $H_2SO_4$ and $HNO_3$) regenerated by removal of $Fe^{3+}$ ions in the third stage can be recycled to the dissolution process of residues in the second stage.

Organic solvent (B) can be regenerated from the organic solvent (B) containing zinc ions resulting from leaching ZnO in the first stage, by contact with an aqueous solution containing HCl, $H_2SO_4$, $HNO_3$ or $NH_4^+$

and $F^-$ ions as shown in the following equations and hence zinc can be recovered in a fourth stage.

$$\underset{(Org)}{R_2Zn} + \underset{(Aq)}{2HCl} \rightleftarrows \underset{(Org)}{2RH} + \underset{(Aq)}{ZnCl_2} \quad (8)$$

$$\underset{(Org)}{R_2Zn} + \underset{(Aq)}{H_2SO_4} \rightleftarrows \underset{(Org)}{2RH} + \underset{(Aq)}{ZnSO_4} \quad (9)$$

$$\underset{(Org)}{R_2Zn} + \underset{(Aq)}{2HNO_3} \rightleftarrows \underset{(Org)}{2RH} + \underset{(Aq)}{Zn(NO_3)_2} \quad (10)$$

$$\underset{(Org)}{R_2Zn} + \underset{(Aq)}{2NH_4HF_2} \rightleftarrows \underset{(Org)}{2RH} + \underset{(Aq)}{(NH_4)_2ZnF_4} \quad (11)$$

A process for producing metallic zinc and zinc oxide from $(NH_4)_2ZnF_4$ formed in equation (11) has been proposed already by the present inventors.

As mentioned above, the present invention relates to a process in which metal values such as iron and zinc can be separated by selective removal of iron ions from various aqueous solutions.

The alkyl phosphoric acid extractant used in this invention is preferably selected from the compounds (A) to (F) shown below:

(A)

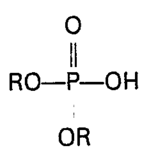

(B)

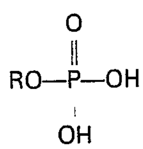

(C)

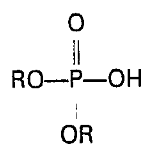

(C')

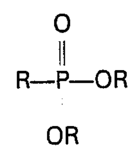

(D)

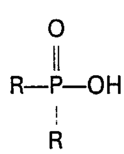

(E)

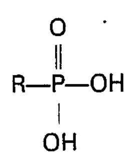

(F)

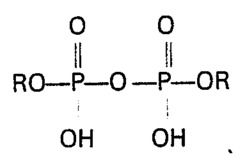

where R represents alkyl of 4 to 14 carbon atoms.
D2EHPA (Di-2-ethyl hexyl phosphoric acid) employed in the Examples set forth below belongs to the (A) group, having alkyl radical of $C_8H_{17}$.

The alkyl-aryl phosphoric acid extractant used in this invention may be a compound shown below:

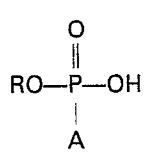

where R represents an alkyl radical having 4 to 14 carbon atoms and A represents an aryl radical (phenyl, triyl, xylyl, etc.). OPPA (Octyl phenyl phosphoric acid) employed in the Examples set forth below has an alkyl radical $C_8H_{17}$ and an aryl radical $C_6H_5$.

The alkyl thio phosphoric acid extractant and alkyl-aryl thio phosphoric acid extractant used in this invention are preferably the compounds shown below:

(A)

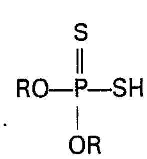

(B)

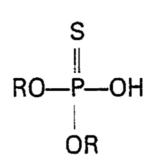

where R represents alkyl or aryl radical having 4 to 22 carbon atoms. D2EHDTPA (Di-2-ethyl hexyl dithio phosphoric acid) employed in the Examples set forth below belongs to the (A) group, having an alkyl radical of $C_8H_{17}$.

The extractant used as the organic solvent (B) in this invention is discussed below. The carboxylic acid used in the invention is preferably selected from the following compounds:

(A)

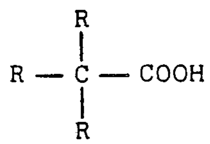

(B)

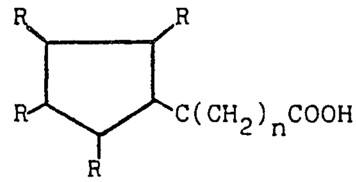

where R is an alkyl radical having 4 to 18 carbon atoms.

Versatic acid 10 (V—10) (tradename, produced by Shell Chemical Co.) employed in the Examples belongs to the (A) group, having an alkyl radical of 9 to 11 carbon atoms.

The hydroxime extractant used in this invention may be the compound shown below:

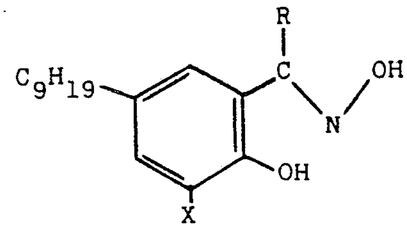

where R represents H; $CH_3$; 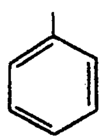 ; or 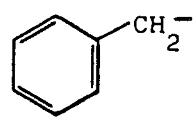

and X is Cl or H. Similar hydroximes of course can be used. SME—529 (tradename, produced by Shell Chemical Co.) used in the example is a hydroxime in which $R=CH_3$.

The petroleum hydrocarbon used in this invention is aliphatic or aromatic hydrocarbon or a mixture thereof. A commercial mixture of various hydrocarbons such as kerosene is often used.

The concentration of extractant in the organic solvent usually lies in the range of 2 to 75 volume %, and higher alcohol containing 6 to 34 carbon atoms as a modifier may be added according to need. The concentration of extractant in the organic solvent can be determined according to the concentrations of $Fe^{3+}$ and zinc ions and the kind and concentration of anion and other heavy metal ions in the aqueous solution. Moreover, the kind and concentration of the extractant can be determined according to the conditions under which it is reused such as in zinc electrowinning and galvanizing processes.

Raw materials to be used in this invention which comprise $Fe^{3+}$ ions extracted and a small amount of zinc ions coextracted into the organic solvent advantageously originate from the following solutions:

1) surface treating solutions and metal plating solutions in iron and steel works;
2) surface treating solutions of piping materials, sheets or plates, etc.;
3) aqueous solutions used for organic reactions;
4) nonferrous metallurgical solutions containing mainly iron and zinc and in which other heavy metal ions may be involved.

Solid raw materials containing zinc advantageously originate from the following materials:

1) dust obtained in dust collectors of exhaust gas from blast furnaces, converters or electric furnaces in iron and steel works;
2) scum of upper and lower parts of fused zinc plating tanks;
3) dust obtained in dust collectors of exhaust gas around the tank;
4) sludge and leached residues obtained in solution purifying treatments in nonferrous metallurgy;
5) slag discharged from pyro-furnaces such as reverberatory furnaces, electric furnaces, flash smelting furnaces or crucible furnaces;
6) oxide ore or silicate ore containing low zinc contents; and
7) materials containing iron, manganese, copper, nickel and/or cobalt, etc. such as manganese nodules.

The invention is illustrated by reference to the accompanying drawings, in which:

Fig. 1 is a flow-sheet of the process for separation and recovery of only $Fe^{3+}$ ions from the organic solvent (A) containing extracted $Fe^{3+}$ ions and coextracted zinc ions according to the present invention.

Fig. 2 shows a flow-sheet of the process for the selective recovery of iron ions from aqueous solutions originating for example from a surface treating process, a metal plating process or a leaching process and containing mainly iron and zinc ions and other heavy metal ions and various anion ions may be present.

Fig. 3 is a flow-sheet for the economical recovery of zinc by treatment of solid raw materials containing mainly iron and zinc.

Fig. 4 is a flow-sheet for the effective recovery of zinc by treatment of solid raw materials containing iron and mainly zinc as ZnO.

Fig. 5 is a graph showing the relationship between the stripping percentage of zinc and $Fe^{3+}$ ions extracted in the organic solvent (A) and the concentration of the aqueous solution containing $NH_4^+$ and $F^-$ ions.

Fig. 6 is a graph showing the relationship between the stripping percentage of zinc and $Fe^{3+}$ ions extracted in the organic solvent (A) and the pH of the aqueous solution containing $NH_4^+$ and $F^-$ ions.

Fig. 7 is a graph showing the relationship between the amounts of ZnO leached by the organic solvent (B) and the leaching time.

Fig. 8 is a graph showing the relationship between the leaching percentage of ZnO, PbO, CdO and $PbO_2$ by the organic solvent (B) and the leaching time.

Fig. 9 is a graph showing the relationship between the amounts of Zn in the aqueous phase and those in the organic phase when using the organic solvent (B).

Fig. 10 is a graph showing the relationship between the temperature of the aqueous solution containing $NH_4^+$ and $F^-$ ions and the solubility of $(NH_4)_3FeF_6$ and $(NH_4)_2ZnF_4$.

The organic solvent (A) (1) containing extracted $Fe^{3+}$ ions is introduced to stripping stage (2) in order to contact with an aqueous solution (3) containing $NH_4^+$ and $F^-$ ions, and only $Fe^{3+}$ ions are transferred to the aqueous phase so as to separate the coextracted zinc ions as shown by the following equation:

$$\underset{(Org)}{R_3Fe} + \underset{(Aq)}{3NH_4HF_2} \rightleftarrows \underset{(Org)}{3RH} + \underset{(Aq)}{(NH_4)_3FeF_6} \qquad (12)$$

The zinc ions present in the organic phase together with the $Fe^{3+}$ ions do not transfer into the aqueous phase regardless of contacting time with the aqueous solution containing $NH_4^+$ and $F^-$ ions, pH values or temperature of solution as shown in Figs. 5 and 6.

In Fig. 2, the solution (4) containing mainly $Fe^{3+}$ and zinc ions is transferred to the extraction stage (1) in order selectively to extract the $Fe^{3+}$ ions by contact with the organic solvent (A) and then zinc ions are coextracted depending on the pH value and their concentration.

Scrubbing of only zinc ion from the organic phase using dilute acid prior to the stage (2) of stripping iron ion has been adopted in the conventional process. However, it is a disadvantage requiring a treatment of the scrubbing solution containing zinc ions.

In this invention, the organic solvent (A) containing $Fe^{3+}$ and zinc ions is contacted with the aqueous solution (3) containing $NH_4^+$ and $F^-$ ions in the stripping stage (2) in order to transfer the $Fe^{3+}$ ions extracted in the organic phase into the aqueous phase as shown in equation (12). Then, only zinc ions remain in the organic phase because the reaction shown in equation (13) does not occur.

$$\underset{(Org)}{R_2Zn} + \underset{(Aq)}{2NH_4HF_2} \longrightarrow \underset{(Org)}{2R.H} + \underset{(Aq)}{(NH_4)_2ZnF_4} \qquad (13)$$

The organic solvent (A) containing zinc ions is recycled to the extraction stage (5), the $Fe^{3+}$ ions are extracted selectively by exchange reaction from the aqueous solution (4) as shown in equations (14) and (15) and the separability of iron and zinc ions is enhanced.

$$\underset{(Org)}{3R_2Zn} + \underset{(Aq)}{2Fe^{3+}} \rightleftarrows \underset{(Org)}{2R_3Fe} + \underset{(Aq)}{3Zn^{2+}} \qquad (14)$$

$$\underset{(Org)}{3RH} + \underset{(Aq)}{Fe^{3+}} \rightleftarrows \underset{(Org)}{R_3Fe} + \underset{(Aq)}{3H^+} \qquad (15)$$

As the result, only $Fe^{3+}$ ions from the aqueous solution (4) originating from the raw materials pass out of the system, as crystalline $(NH_4)_3FeF_6$ (7).

Metallic iron or iron oxide is produced by the thermal decomposition of $(NH_4)_3FeF_6$ in a hydrogen gas

stream or a gas stream containing oxygen or $H_2O$ as shown in equations (16) to (18), and simultaneously $NH_4HF_2$, $NH_4F$ and F gases generated in the thermal decomposition are absorbed and recovered.

$$(NH_4)_3FeF_6 + 1\tfrac{1}{2} H_2 \longleftarrow \longrightarrow Fe + 3NH_4HF_2 \uparrow \quad (16)$$

$$(NH_4)_3FeF_6 + 1\tfrac{1}{2} H_2O \longleftarrow \longrightarrow \tfrac{1}{2} Fe_2O_3 + 3NH_4HF_2 \uparrow \quad (17)$$

$$(NH_4)_3FeF_6 + 1\tfrac{1}{2} O_2 \longleftarrow \longrightarrow \tfrac{1}{2} Fe_2O_3 + 3NH_4F \uparrow + 3F \uparrow \quad (18)$$

In Fig. 3, raw material (14) is introduced to acid leaching stage (6) in order to leach iron and zinc, etc. (of course, other valuable metals besides zinc, such as nickel, cobalt, etc. may be leached) by contact with an aqueous solution containing one or more acids selected from HCl, $H_2SO_4$ and $HNO_3$. After the iron is oxidized as needed in order to convert to $Fe^{3+}$ ion (if leaching is conducted with an aqueous solution containing $HNO_3$, the oxidation stage is omitted), the aqueous solution (4) containing mainly $Fe^{3+}$ and zinc is transferred to the extraction stage (5) in order to extract $Fe^{3+}$ ions into the organic phase by contact with the organic solvent (A) and most of the raffinate is recycled to the acid leaching stage (6).

The raffinate containing zinc ions (and any nickel, cobalt, etc.) is introduced to the zinc extraction stage (11) according to the increase in zinc ion in the raffinate. If the raffinate contains $HNO_3$, it is transferred to the $HNO_3$ extraction stage (9) in order to extract $HNO_3$ by contact with an organic solvent containing neutral phosphoric acid ester. $HNO_3$ transferred to the organic phase is introduced to the stripping stage (10) to strip into an aqueous phase from the organic phase by contact with water and is recycled to the acid leaching stage (6).

$Fe^{3+}$ ions transferred to the organic solvent (A) (zinc ion may be coextracted) is introduced to the stripping stage (2) in order to strip from the organic phase by contact with an aqueous solution (3) containing $NH_4^+$ and $F^-$ ions. Zinc ions in the organic phase are not stripped at all and are recycled to the extraction stage (5). $Fe^{3+}$ ions stripped in the aqueous phase pass out of the system as crystalline $(NH_4)_3FeF_6$ (7).

In Fig. 4, the solid raw material is introduced to the ZnO leaching stage (16) in order to extract ZnO selectively by contact with the organic solvent (B) as shown in equation (3). Zinc ions transferred in the organic phase are stripped in the following stripping stage (19) by contact with HCl, $H_2SO_4$, $HNO_3$ or an aqueous solution containing $NH_4^+$ and $F^-$ ions and recovered in the form of $ZnCl_2$, $ZnSO_4$, $Zn(NO_3)_2$ or $(NH_4)_2ZnF_4$ respectively and simultaneously the organic solvent (B) is regenerated.

If the raw material contains CdO or PbO, these are leached as well as zinc in the direct leaching stage (16) by the organic solvent as shown in Fig. 8 and transferred to the organic phase. These impurities can be selectively transferred into the aqueous phase from the organic phase by contact with an aqueous solution (18) of pH below 5 in the scrubbing stage (17) and consequently only zinc ions exist in the organic phase, and high purity zinc salts (13) are recovered in the following stripping stage (19).

Since the leached residue discharged from the ZnO leaching stage (16) contains large amounts of the organic solvent (B), it is recovered by dissolution of the residue with an aqueous solution (15) containing one or more acids selected from HCl, $H_2SO_4$ and $HNO_3$ in the following acid leaching stage (6), Undissolved residue (8) is abandoned after water washing.

The aqueous solution (4) containing mainly iron and zinc ions is transferred to the iron extraction stage (5) in order to extract iron ions by contact after oxidation if necessary, with the organic solvent (A). The organic solvent (A) containing $Fe^{3+}$ ions is introduced to the stripping stage (2) in order to transfer them into the aqueous phase by contact with an aqueous solution containing $NH_4^+$ and $F^-$ ions and the organic solvent (A) is simultaneously regenerated.

The aqueous solution containing zinc ions after removal of iron ions is introduced to the zinc extraction stage (11). If $HNO_3$ solution (15) is used in the acid leaching stage (6), the above-mentioned aqueous solution is transferred to the zinc extraction stage (11) after extraction and recovery of $HNO_3$ by contact with an organic solvent containing neutral phosphoric acid ester in the $HNO_3$ extraction stage (9). Zinc ions extracted into the organic phase produce various zinc salts (13) by contact with HCl, $H_2SO_4$, $HNO_3$ or an aqueous solution containing $NH_4^+$ and $F^-$ ions as shown in equations (8) to (11).

The aqueous solution (4) containing iron and zinc ions in this invention optionally contains one or more acids selected from the group consisting of sulphuric acid, hydrochloric acid, nitric acid, acetic acid, gluconic acid, citric acid, oxalic acid, salicylic acid, hydrofluoric acid, etc.

Heavy metal ions coexisting with iron and zinc ions in the raw materials may be Mn, Al, Ni, Co, Pb, Sn, Mg, Mo, W, As, Cu ions, etc.

The invention is illustrated by the following Examples, which describe preferred embodiments of the invention.

Example 1

The organic solvent (A) which comprises 30% D2EHPA + 70% n-paraffin and contains 10.5 g/l of $Fe^{3+}$ and 1.1 g/l of zinc was stripped with various aqueous solutions containing $NH_4^+$ and $F^-$ ions. The results are shown in Table 1.

TABLE 1

| | | Stripping Percentage (%) Concentration of Aqueous Solution Containing $(NH_4)_2F_2$ and $NH_4HF_2$ | | | | | |
|---|---|---|---|---|---|---|---|
| pH | metal | 20 g/l | 50 g/l | 100 g/l | 150 g/l | 200 g/l | 250 g/l |
| 5 | Fe | 10.1 | 31.0 | 90.9 | 95.1 | 100.0 | 100.0 |
| | Zn | 0 | 0 | 0 | 0 | 0 | 0 |
| 7 | Fe | — | 91.4 | 98.7 | 99.9 | 100.0 | — |
| | Zn | — | 0 | 0 | 0 | 0 | — |
| 9 | Fe | 49.7 | 99.3 | 100.0 | — | — | — |
| | Zn | 0 | 0 | 0 | — | — | — |
| 10 | Fe | 67.2 | 100.0 | 100.0 | — | — | — |
| | Zn | 0 | 0 | 0 | — | — | — |

The relationship between the pH of strip solutions and stripping percentages of $Fe^{3+}$ and zinc ions from the organic phase is shown in Fig. 6. The mole ratio of contained ammonium and fluorine changes linearly with pH. It is clear from these results that only $Fe^{3+}$ ions can be transferred selectively into the aqueous phase (strip solution) from the organic solvent containing $Fe^{3+}$ and zinc ions, and consequently zinc ions remain in the organic phase and can be recycled to the extraction stage.

Example 2

The results of $Fe^{3+}$ extraction from an aqueous solution containing mainly $Fe^{3+}$ and zinc ions are shown in Table 2, in which the organic phase is 30% D2EHDTPA and the ion concentrations are in g/l.

TABLE 2

| pH and ion concentration of the initial aq. phase | | | ion concentration in the aq. phase after extraction | | ion concentration in the org. phase after extraction | | extraction distribution ratio | |
|---|---|---|---|---|---|---|---|---|
| pH | Zn | Fe | Zn | Fe | Zn | Fe | Zn | Fe |
| 1.0 | 56.08 | 0.105 | 55.22 | 0.00071 | 8.25 | 1.14 | 0.23 | 163.3 |
| 0.5 | 161.86 | 0.0994 | 160.58 | 0.000260 | 17.48 | 1.20 | 0.11 | 3.9 |
| 0.0 | 383.90 | 0.090 | 381.39 | 0.000409 | 25.43 | 1.009 | 0.06 | 2.5 |

It is shown by Table 2 that only $Fe^{3+}$ ions can be selectively extracted by maintaining an extremely high $H^+$ ion concentration in the initial aqueous phase, but that zinc cannot be prevented from coextraction where it is impossible to maintain a high $H^+$ ion concentration or an extraordinarily high zinc ion concentration in comparison with the $Fe^{3+}$ ion concentration.

Example 3

Analysis of dust generated in a fused zinc plating process is shown below.

| Fe | Zn | Pb | Mn | F | Cl |
|---|---|---|---|---|---|
| 1.6% | 65.9% | 3.1% | 0.32% | 0.15% | 27.7% |

1000 g of the above dust was used for the test. The organic solvent (B) used comprises 30% V—10 and 70% isoparaffin. The results of leaching tests are shown in Fig. 7. 224 g of leached residue having the following composition was obtained.

| Fe | Zn | Pb | Mn | F | Cl |
|---|---|---|---|---|---|
| 7.12% | 23.3% | 15.8% | 1.41% | 0.82% | 12.59% |

0.32 g of the organic solvent (B) was contained in 1 g of residue.

The amount of undissolved residue was 18 g after dissolution of the above-mentioned leached residue by 180 g/l $HNO_3$, and all the adhering organic solvent (B) could be recovered.

The composition of the $HNO_3$ dissolving solution is shown below.

| Fe | Zn | Pb | Mn |
|---|---|---|---|
| 22.7 g/l | 74.56 g/l | 8.4 g/l | 4.5 g/l |

The iron concentration in this solution could be decreased under 0.008 g/l by twice contacting with an organic solvent containing 30% D2EHPA and 70% n-paraffin.

Example 4

An organic solvent (B) comprising 30% V—10, 5% SME—529 and 65% isoparaffin and containing amounts of Zn, Cd and Pb ions as shown in the following table was used for the test.

| Zn | Cd | Pb |
|---|---|---|
| 62.08 g/l | 3.229 g/l | 3.689 g/l |

An aqueous solution containing $ZnCl_2$, $ZnSO_4$ or $Zn(NO_3)_2$ is used as a scrubbing solution for Pb and Cd coextracted and the scrubbing result based on a ratio of volume of organic solvent/volume of aqueous solution of 10:1 is shown in Table 3.

TABLE 3

| | | Org. phase after scrubbing | | | Aq. phase after scrubbing | | | |
|---|---|---|---|---|---|---|---|---|
| Zn salt | initial pH | Zn (g/l) | Cd (g/l) | Pb (g/l) | Zn (g/l) | Cd (g/l) | Pb (g/l) | pH |
| $ZnCl_2$ | 3.0 | 62.63 | 0.003 | 0.04 | 39.71 | 0.342 | 0.369 | 5.0 |
| $ZnSO_4$ | 2.0 | 54.10 | 0.005 | 0.001 | 40.00 | 0.320 | 0.004 | 5.0 |
| $Zn(NO_3)_2$ | 1.0 | 61.97 | 0.05 | 0.04 | 19.71 | 0.320 | 0.37 | 5.0 |

It is found from Table 3 that almost all the Cd and Pb in the organic solution (B) can be recovered. After Pb ions in the organic phase are transferred to the aqueous phase by scrubbing with $ZnSO_4$, the amount of Pb in the aqueous phase does not exceed 0.004 g/l because it is crystallized as $PbSO_4$ crystal.

Example 5

The results of stripping zinc ions extracted in the organic solvent (B) are shown in Fig. 9. In the Figure, —o—o— and —■—■— indicate 30% V—10 + 70% isoparaffin and 30% V—10 + 5% SME—529 + 65% isoparaffin, respectively. 259.85 g/l $H_2SO_4$ and 190.9 g/l HCl were used as a strip solution and similar stripping results were obtained.

The results of stripping with an aqueous solution containing $NH_4^+$ and $F^-$ ions are shown below.

| Organic solvent | Zn Concentration in the initial Org phase | Zn Concentration after stripping |
|---|---|---|
| 30% V—10 + 70% isoparaffin | 63.00 g/l | 0.003 g/l |
| 30% V—10 + 5% SME—529 + 65% isoparaffin | 41.33 g/l | 0.007 g/l |

It could be confirmed that zinc ions transferred into the aqueous phase were crystallized as $(NH_4)_2ZnF_4$ crystal.

**Claims**

1. A process for selectively stripping $Fe^{3+}$ ions into an aqueous phase from an organic solvent (A), which process comprises bringing an organic solvent (A) containing one or more compounds selected from the group consisting of alkyl phosphoric acid, alkyl-aryl phosphoric acid, alkyl thio phosphoric acid and alkyl-aryl thio phosphoric acid together with a petroleum hydrocarbon as a diluent and $Fe^{3+}$ and zinc ions into contact with an aqueous solution containing $NH_4^+$ and $F^-$ ions.

2. A process according to claim 1 in which the organic solvent (A) containing the $Fe^{3+}$ and zinc ions has been obtained by bringing the organic solvent into contact with an aqueous solution containing mainly $Fe^{3+}$ and zinc ions.

3. A process for treating solid raw material containing mainly iron and zinc, which process comprises:

(a) a 1st step of dissolving solid raw material containing mainly iron and zinc with acidic aqueous solution;

(a') if dissolved iron from the 1st step is not already present as $Fe^{3+}$ ions, converting dissolved iron to $Fe^{3+}$ ions;

(b) a 2nd step of selectively extracting $Fe^{3+}$ ions from the acidic aqueous solution which contains them and which contains mainly $Fe^{3+}$ and zinc ions by contacting the solution with an organic solvent (A) containing one or more compounds selected from the group consisting of alkyl phosphoric acid, alkyl-aryl phosphoric acid, alkyl thio phosphoric acid and alkyl-aryl thio phosphoric acid together with a petroleum hydrocarbon as a diluent, such that $Fe^{3+}$ and zinc ions are extracted into the organic solvent (A);

(c) a 3rd step of selectively stripping $Fe^{3+}$ ions from the organic solvent (A) containing the $Fe^{3+}$ and zinc ions by contacting it with an aqueous solution containing $NH_4^+$ and $F^-$ ions; and

(d) a 4th step of recycling aqueous solution resulting from the 2nd step back to the 1st step.

4. A process according to claim 3 wherein the acidic aqueous solution used in the 1st step is an aqueous solution containing one or more acids selected from the group consisting of $HNO_3$, $H_2SO_4$ and HCl.

5. A process for recovering zinc in the form of metallic zinc, zinc oxide, zinc chloride, zinc sulphate or zinc nitrate from a solid raw material containing zinc and iron, which process comprises:

(a) a 1st step of leaching the solid raw material with an organic solvent (B) comprising (i) one or more compounds selected from the group consisting of carboxylic acids together with (ii) a petroleum hydrocarbon as a diluent;

(b) a 2nd step of recovering organic solvent (B) remaining in the leached residue from the 1st step by dissolution with an aqueous solution containing one or more acids selected from the group consisting of HCl, $H_2SO_4$ and $HNO_3$;

(b') if dissolved iron in the aqueous solution which results from the 2nd step is not already present as $Fe^{3+}$ ions, converting dissolved iron to $Fe^{3+}$ ions;

(c) a 3rd step of selectively extracting $Fe^{3+}$ ions from the aqueous solution which contains them and which contains mainly $Fe^{3+}$ and zinc ions by contacting the solution with an organic solvent (A) containing one or more compounds selected from the group consisting of alkyl phosphoric acid, alkyl-aryl phosphoric acid, alkyl thio phosphoric acid and alkyl-aryl thio phosphoric acid together with a petroleum hydrocarbon as a diluent, such that $Fe^{3+}$ and zinc ions are extracted into the organic solvent (A);

(d) a 4th step of selectively stripping $Fe^{3+}$ ions from the organic solvent (A) containing the $Fe^{3+}$ and zinc ions by contacting it with an aqueous solution containing $NH_4^+$ and $F^-$ ions; and

(e) a 5th step of regenerating organic solvent (B) from the organic solvent (B) containing zinc which results from the 1st step, by contacting the organic solvent (B) containing zinc with an aqueous solution containing HCl, $H_2SO_4$, $HNO_3$ or $NH_4^+$ and $F^-$ ions.

6. A process according to claim 5 wherein an aqueous solution containing $NH_4^+$ and $F^-$ ions is employed in the 5th step and the resulting zinc salt is converted to metallic zinc or zinc oxide.

7. A process according to claim 5 or 6 wherein the organic solvent (B) contains one or more compounds containing the hydroxime group in the range of from 0.1 to 15 volume %.

8. A process according to any one of the claims 5—7 wherein the raw material also contains lead and cadmium, and lead and cadmium are coextracted with the zinc into the organic solvent (B) in the 1st step, and lead and cadmium are then selectively removed from the organic solvent (B) by contact with an aqueous solution of pH under 5.

9. A process according to any one of claims 5—8 wherein the solid raw material contains zinc oxide.

10. A process according to any one of claims 2—9 wherein the organic solvent (A) containing zinc-ions which results from selectively stripping the $Fe^{3+}$ ions is recycled to contact again the aqueous solution containing mainly $Fe^{3+}$ and zinc ions.

**Patentansprüche**

1. Ein Verfahren zum selektiven Abtreiben von $Fe^{3+}$ Ionen aus einem organischen Lösungsmittel (A) in eine wässerige Phase, wobei das Verfahren darin besteht, ein organisches Lösungsmittel (A), das eine oder mehrere der Verbindungen aus der Gruppe der Alkylphosphorsäure, Alkylarylphosphorsäure. Alkylthiophosphorsäure sowie Alkylarylthiophosphorsäure enthält, zusammen mit einem Oelkohlenwasserstoff als Verdünner und $Fe^{3+}$ Ionen und Zinkionen in Kontakt mit einer wässerigen Lösung zu bringen, die $NH_4^+$ Ionen und $F^-$ Ionen enthält.

2. Ein Verfahren nach Anspruch 1, dadurch gekennzeichnet, dass das $Fe^{3+}$ Ionen und Zinkionen enthaltende, organische Lösungsmittel (A) erreicht wurde, indem das organische Lösungsmittel in Kontakt mit einer wässerigen Lösung gebracht wurde, die hauptsächlich $Fe^{3+}$ Ionen und Zinkionen enthält.

3. Ein Verfahren zur Behandlung von festen Rohmaterialien, die hauptsächlich Eisen und Zink enthalten, wobei das Verfahren aus den folgenden Schritten besteht:

(a) In einen ersten Schritt wird das feste, hauptsächlich Eisen und Zink enthaltende Rohmaterial mittels einer säurehaltigen, wässerigen Lösung aufgelöst.

(a') Falls das im ersten Schritt gelöste Eisen noch nicht die Form von $Fe^{3+}$ Ionen angenommen hat, erfolgt eine Umwandlung des Eisens in $Fe^{3+}$ Ionen.

(b) In einem zweiten Schritt werden aus der säurehaltigen wässerigen Lösung, welche die $Fe^{3+}$ Ionen, und hauptsächlich $Fe^{3+}$ Ionen und Zinkionen enthält, selektive $Fe^{3+}$ Ionen extrahiert, indem besagte Lösung mit einem organischen Lösungsmittel (A), das eine oder mehrere der Verbindungen aus der Gruppe der Alkylphosphorsäure, Alkylarylphosphorsäure, Alkylthiophosphorsäure sowie Alkylarylthiophosphorsäure enthält, zusammen mit einem Oelkohlenwasserstoff als Verdünner in Kontakt gebracht wird, so dass $Fe^{3+}$ und Zinkionen im organischen Lösungsmittel (A) angereichert werden.

(c) In einem dritten Schritt werden $Fe^{3+}$ Ionen selektive vom $Fe^{3+}$ Ionen und Zinkionen enthaltenden, organischen Lösungsmittel (A) abgetrieben, wobei das Lösungsmittel (A) in Kontakt mit einer wässerigen Lösung gebracht wird, die $NH_4^+$ und $F^-$ Ionen enthält.

(d) In einem vierten Schritt erfolgt das Recycling der wässerigen Lösung vom Zustand nach dem zweiten Schritt zu jenem in Schritt 1.

4. Ein Verfahren nach Anspruch 3, dadurch gekennzeichnet, dass die in Schritt 1 verwendete, säurehaltige, wässerige Lösung eine wässerige Lösung ist, die eine oder mehrere Säuren aus der Gruppe der $HNO_3$, $H_2SO_4$ und HCl Säuren enthält.

5. Ein Verfahren zur Rückgewinnung des Zinks in der Form von metallischem Zink, Zinkoxyd, Zinkchlorid, Zinksulphat oder Zinknitrat aus einem festen, Zink und Eisen enthaltenden Rohmaterial mittels der folgenden Schritte:

(a) In einem ersten Schritt erfolgt das Auslaugen des festen Rohmaterials mit einem organischen Lösungsmittel (B), das (i) eine oder mehrere Verbindungen aus der Gruppe der Karbonsäuren enthält, zusammen mit (ii) einem Oelkohlenwasserstoff als Verdünner.

(b) in einem zweiten Schritt erfolgt die Rückgewinnung des organischen Lösungsmittels (B), das nach dem ersten Schritt, Auslagen, noch im Rückstand vorhanden ist mittels Auflösung mit einer wässerigen Lösung, die eine oder mehrere Säuren aus der Gruppe der $HNO_3$, $H_2SO_4$ und HCl Säuren enthält.

(b') Falls das gelöste Eisen in der wässerigen Lösung nach Schritt 2 noch nicht in der Form von $Fe^{3+}$ Ionen vorhanden ist, erfolgt nun eine Umwandlung des gelösten Eisens in $Fe^{3+}$ Ionen.

(c) in einem dritten Schritt werden aus der säurehaltigen wässerigen Lösung, welche die $Fe^{3+}$ Ionen, und hauptsächlich $Fe^{3+}$ Ionen und Zinkionen enthält, selektive $Fe^{3+}$ Ionen extrahiert, indem besagte Lösung mit einem organischen Lösungsmittel (A), das eine oder mehrere der Verbindungen aus der Gruppe der Alkylphosphorsäure, Alkylarylphosphorsäure, Alkylthiophosphorsäure sowie Alkylarylthiophosphorsäure enthält, zusammen mit einem Oelkohlenwasserstoff als Verdünner in Kontakt gebracht wird, so dass $Fe^{3+}$ und Zinkionen im organischen Lösungsmittel (A) angereichert werden.

(d) In einem vierten Schritt werden $Fe^{3+}$ Ionen selektive vom $Fe^{3+}$ Ionen und Zinkionen enthaltenden, organischen Lösungsmittel (A) abgetrieben, wobei das lösungsmittel (A) in Kontakt mit einer wässerigen Lösung gebracht wird, die $NH_4^+$ und $F^-$ Ionen enthält.

(e) Ein fünfter Schritt besteht in der Regeneration des organischen Lösungsmittels (B) aus dem nach dem ersten Schritt Zink enthaltenden, organischen Lösungsmittel (B), indem das organische Lösungsmittel (B), das Zink enthält, in Kontakt mit einer wässerigen lösung gebracht wird, die HCl, $H_2SO_4$ $HNO_3$ oder $NH_4^+$ und $F^-$ Ionen enthält.

6. Ein Verfahren nach Anspruch 5, dadurch gekennzeichnet, dass die $NH_4^+$ und $F^-$ Ionen enthaltende,

wässerige Lösung im fünften Schritt angewandt wird und dass das aus dem Prozess hervorgegengene Zinksalz in metallisches Zink oder Zinkoxyd umgewandelt wird.

7. Ein Verfahren nach Anspruch 5 oder 6, dadurch gekennzeichnet, dass das organische Lösungsmittel (B) eine oder mehrere Verbindung der Hydroxylgruppe in der Grössenordnung von 0.1 bis 15 Volumenprozenten enthält.

8. Ein Verfahren nach einem der Ansprüche 5 bis 7, dadurch gekennzeichnet, dass das Rohmaterial ebenfalls Blei und Kadmium enthält und dass Blei und Kadmium im ersten Schritt zusammen mit Zink in das organische Lösungsmittel (B) extrahiert werden und dann selektive aus dem organischen Lösungsmittel (B) ausgeschieden werden, indem besagtes Lösungsmittel mit einer wässerigen Lösung mit einem pH-Wert unter 5 in Kontakt gebracht wird.

9. Ein Verfahren nach einem der Ansprüche 5 bis 8, dadurch gekennzeichnet, dass das feste Rohmaterial Zinkoxyd enthält.

10. Ein Verfahren nach einem der Ansprüche 2 bis 9, dadurch gekennzeichnet, dass das organische Lösungsmittel (A), das aufgrund des selektiven Abtreibens von $Fe^{3+}$ Zinkionen enthält ein Recyclingverfahren durchläuft, um dann wieder mit der hauptsächlich $Fe^{3+}$ Ionen und Zinkionen enthaltenden wässerigen Lösung in Kontakt gebracht zu werden.

**Revendications**

1. Un procédé de décapage sélectif des ions $Fe^{3+}$ en une phase aqueuse à partir d'un solvant organique (A), lequel procédé consiste à amener un solvant organique (A) contenant un ou plusieurs composants choisis parmi un groupe constitué d'acide alkyle phosphorique, acide alkyle-aryle phosphorique, acide alkyle thio phosphorique et acide alkyle-aryle thio phosphorique ainsi qu'un hydrocarbure de pétrole comme diluant et des ions $Fe^{3+}$ et de zinc en contact avec une solution aqueuse comprenant des ions et $F^-$ et $NH_4^+$.

2. Un procédé selon la revendication 1 dans lequel le solvant organique (A) contenant des ions $Fe^{3+}$ et de zinc a été obtenu en amenant le solvant organique au contact d'une solution aqueuse contenant principalement des ions $Fe^{3+}$ et de zinc.

3. Un procédé de traitement d'une matière brute solide contenant principalement du fer et du zinc, lequel procédé consiste en:

(a) une première étape de dissolution de la matière brute solide contenant principalement du fer et du zinc avec une solution acide aqueuse;

(a') si le fer dissout à la première étape ne se présente pas encore comme des ions $Fe^{3+}$, conversion du fer dissout en ions $Fe^{3+}$;

(b) une deuxième étape d'extraction sélective des ions $Fe^{3+}$ de la solution acide aqueuse qui les contient et qui contient principalement des ions $Fe^{3+}$ et de zinc par mise en contact de la solution avec un solvant organique (A) contenant un ou plusieurs composants choisis dans un groupe constitué d'acide alkyle phosphorique, acide alkyle-aryle phosphorique, acide alkyle thio phosphorique, acide alkyle-aryle thio phosphorique avec un hydrocarbure comme diluant, de telle manière que les ions $Fe^{3+}$ et de zinc passent dans le solvant organique (A);

(c) une troisième étape de décapage sélectif des ions $Fe^{3+}$ à partir d'un solvant organique (A) contenant des ions $Fe^{3+}$ et de zinc en la mettant en contact avec une solution aqueuse contenant des ions $NH_4^+$ et $F^-$; et

(d) une quatrième étape de recyclage de la solution aqueuse résultant en un retour de la deuxième étape à la première.

4. Un procédé selon la revendication 3 dans lequel la solution acide aqueuse utilisée à la première étape est une solution aqueuse contenant un ou plusieurs acides choisis dans un groupe de $HNO_3$, $H_2SO_4$ et HCl.

5. Un procédé de récupération du zinc sous forme de zinc métallique, oxyde de zinc, chlorure de zinc, sulfate de zinc ou nitrate de zinc à partir d'une matière brute solide renfermant du zinc et du fer, lequel procédé consiste en:

(a) une première étape de lessivage de la matière brute solide à l'aide d'un solvant organique (B) comprenant un ou plusieurs composants selectionnés parmi le groupe constitué d'acides carboxyliques avec (ii) un hydrocarbure de pétrole comme diluant;

(b) une deuxième étape de récupération du solvant organique (B) restant dans le résidu lessivé de la première étape par dissolution à l'aide d'une solution aqueuse comprenant un ou plusieurs acides choisis dans le groupe constitué de HCl, $H_2SO_4$ et $HNO_3$;

(b') si le fer dissout dans la solution aqueuse qui résulte de la deuxième étape n'est pas déjà présent sous forme d'ions $Fe^{3+}$ conversion du fer dissout en ions $Fe^{3+}$;

(c) une troisième étape d'extraction sélective des ions $Fe^{3+}$ à partir de la solution aqueuse qui les contient et qui renferme principalement des ions $Fe^{3+}$ et de zinc par mise en contact de la solution et d'un solvant organique (A) contenant un ou plusieurs composants sélectionnés dans le groupe constitué d'acide alkyle phosphorique, acide alkyle-aryle phosphorique, acide alkyle thio phosphorique et acide alkyle-aryle thio phosphorique ainsi qu'un hydrocarbure de pétrole comme diluant, de telle manière que les ions $Fe^{3+}$ et de zinc passent dans le solvant organique (A);

(d) une quatrième étape de décapage sélectif des ions $Fe^{3+}$ à partir du solvant organique (A) contenant les ions $Fe^{3+}$ et de zinc par sa mise en contact avec une solution aqueuse renfermant des ions $NH_4^+$ et $F^-$; et

(e) une cinquième étape de régénération du solvant organique (B) à partir du solvant organique (B) contenant du zinc en résultat de la première étape, par la mise en contact du solvant organique (B) contenant le zinc avec une solution aqueuse renfermant des ions HCl, $H_2SO_4$, $HNO_3$ ou $NH_4^+$ et $F^-$.

6. Un procédé selon la revendication 5 dans lequel une solution aqueuse contenant des ions $NH_4$ et $F^-$ est employée à la cinquième étape et dans lequel le sel de zinc résultant est converti en zinc métallique ou en oxyde de zinc.

7. Un procédé selon la revendication 5 ou 6 dans lequel le solvant organique (B) contient un ou plusieurs composants du groupe hydroxyle dans la gamme 0,1 à 15 volumes %.

8. Un procédé selon l'une quelconque des revendications 5—7 dans lequel la matière brute contient également du plomb et du cadmium et dans lequel le plomb et le cadmium sont extraits en même temps que le zinc dans le solvant organique (B) à la première étape et où le plomb et le zinc sont ensuite enlevés sélectivement du solvant organique (B) par contact avec une solution aqueuse de pH, en 5.

9. Un procédé selon l'une quelconque des revendications 5—8 dans lequel la matière brute solide renferme un oxyde de zinc.

10. Un procédé selon l'une quelconque des revendications 2—9 dans lequel le solvant organique (A) contenant des ions de zinc qui résulte du décapage sélectif des ions $Fe^{3+}$ est recyclé pour être remis en contact avec la solution aqueuse contenant principalement des ions $Fe^{3+}$ et de zinc.

FIG.1

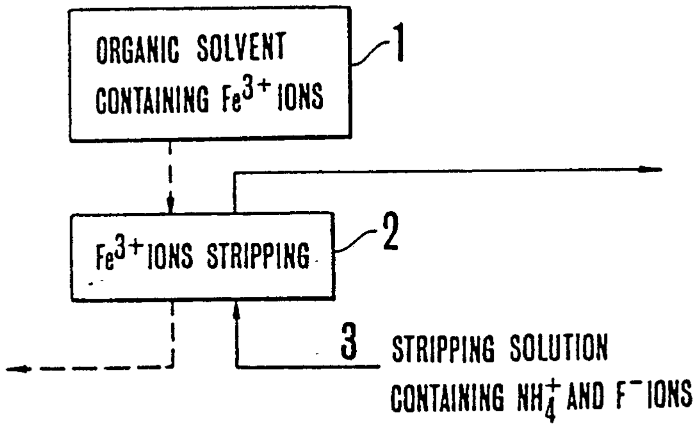
ORGANIC SOLVENT CONTAINING $Fe^{3+}$ IONS
1
$Fe^{3+}$ IONS STRIPPING
2
3
STRIPPING SOLUTION CONTAINING $NH_4^+$ AND $F^-$ IONS

FIG.2

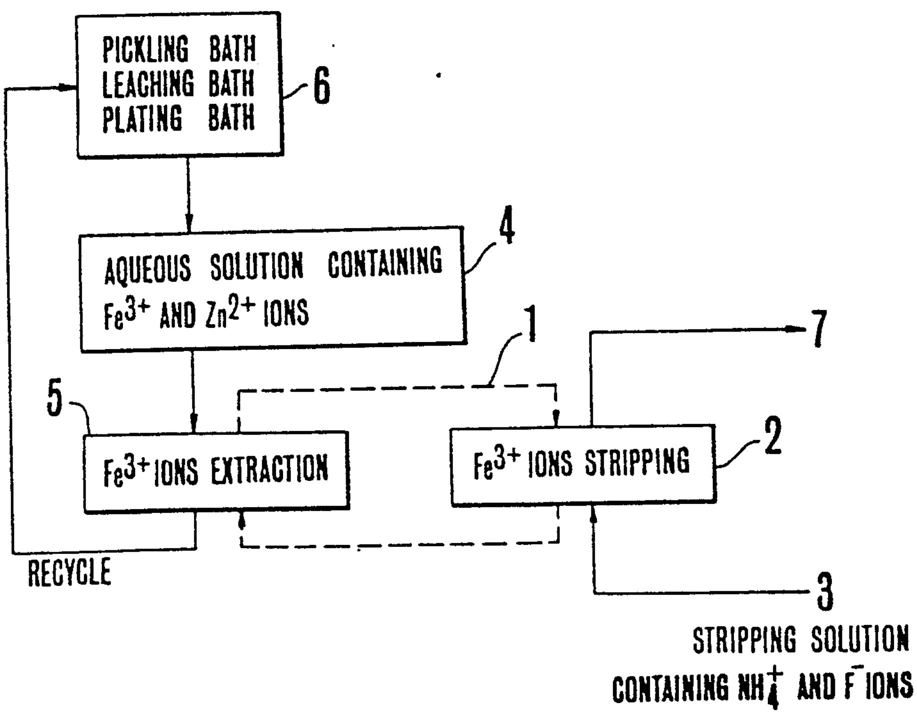
PICKLING BATH
LEACHING BATH
PLATING BATH
6
AQUEOUS SOLUTION CONTAINING $Fe^{3+}$ AND $Zn^{2+}$ IONS
4
1
7
5
$Fe^{3+}$ IONS EXTRACTION
$Fe^{3+}$ IONS STRIPPING
2
RECYCLE
3
STRIPPING SOLUTION CONTAINING $NH_4^+$ AND $F^-$ IONS

FIG.3

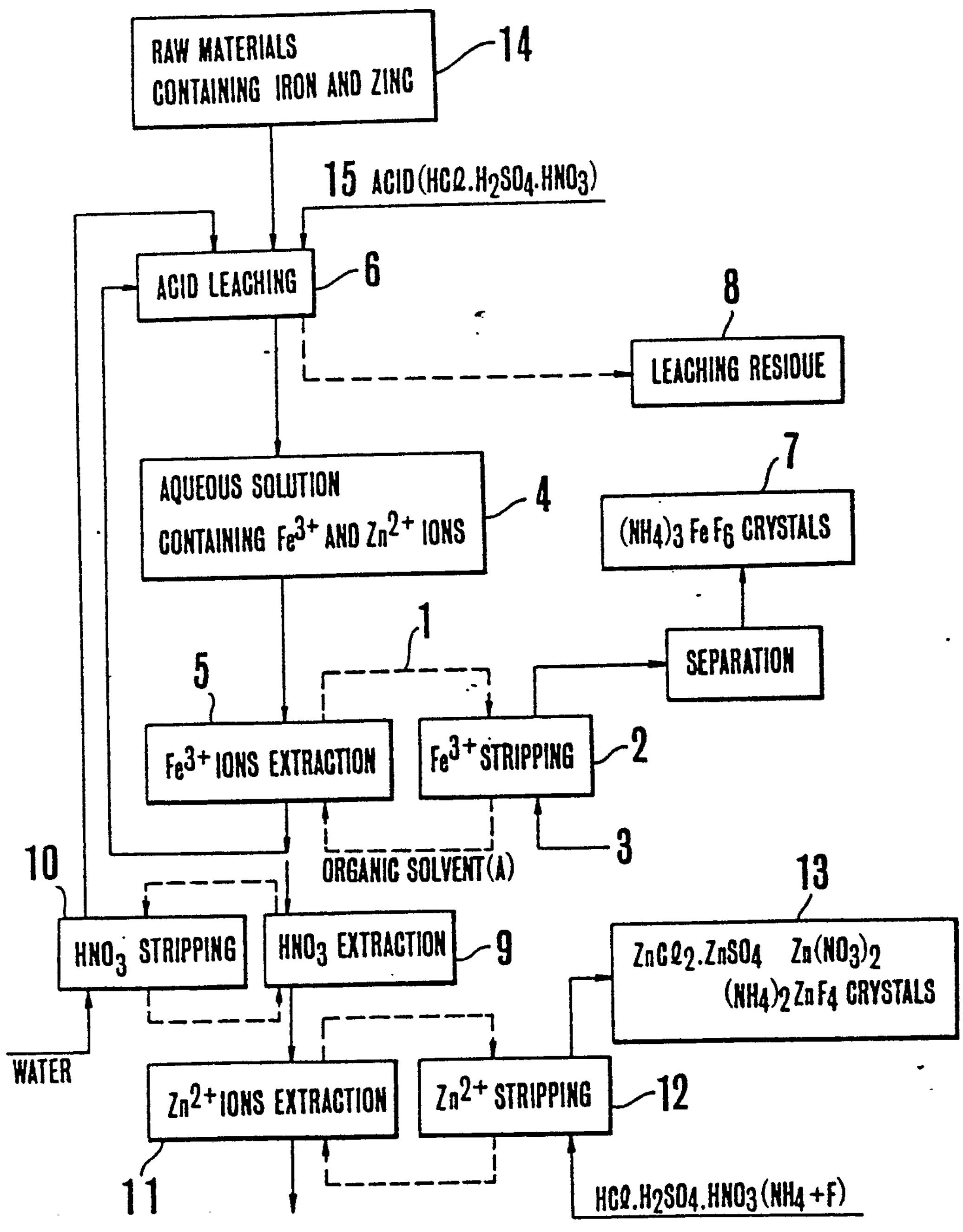
RAW MATERIALS CONTAINING IRON AND ZINC
14
15 ACID (HCℓ.$H_2SO_4$.$HNO_3$)
ACID LEACHING
6
8
LEACHING RESIDUE
AQUEOUS SOLUTION CONTAINING $Fe^{3+}$ AND $Zn^{2+}$ IONS
4
7
$(NH_4)_3FeF_6$ CRYSTALS
SEPARATION
1
5
$Fe^{3+}$ IONS EXTRACTION
$Fe^{3+}$ STRIPPING
2
3
ORGANIC SOLVENT (A)
10
$HNO_3$ STRIPPING
$HNO_3$ EXTRACTION
9
13
$ZnCℓ_2$.$ZnSO_4$ $Zn(NO_3)_2$ $(NH_4)_2ZnF_4$ CRYSTALS
WATER
$Zn^{2+}$ IONS EXTRACTION
$Zn^{2+}$ STRIPPING
12
11
HCℓ.$H_2SO_4$.$HNO_3$ ($NH_4$+F)

FIG.4

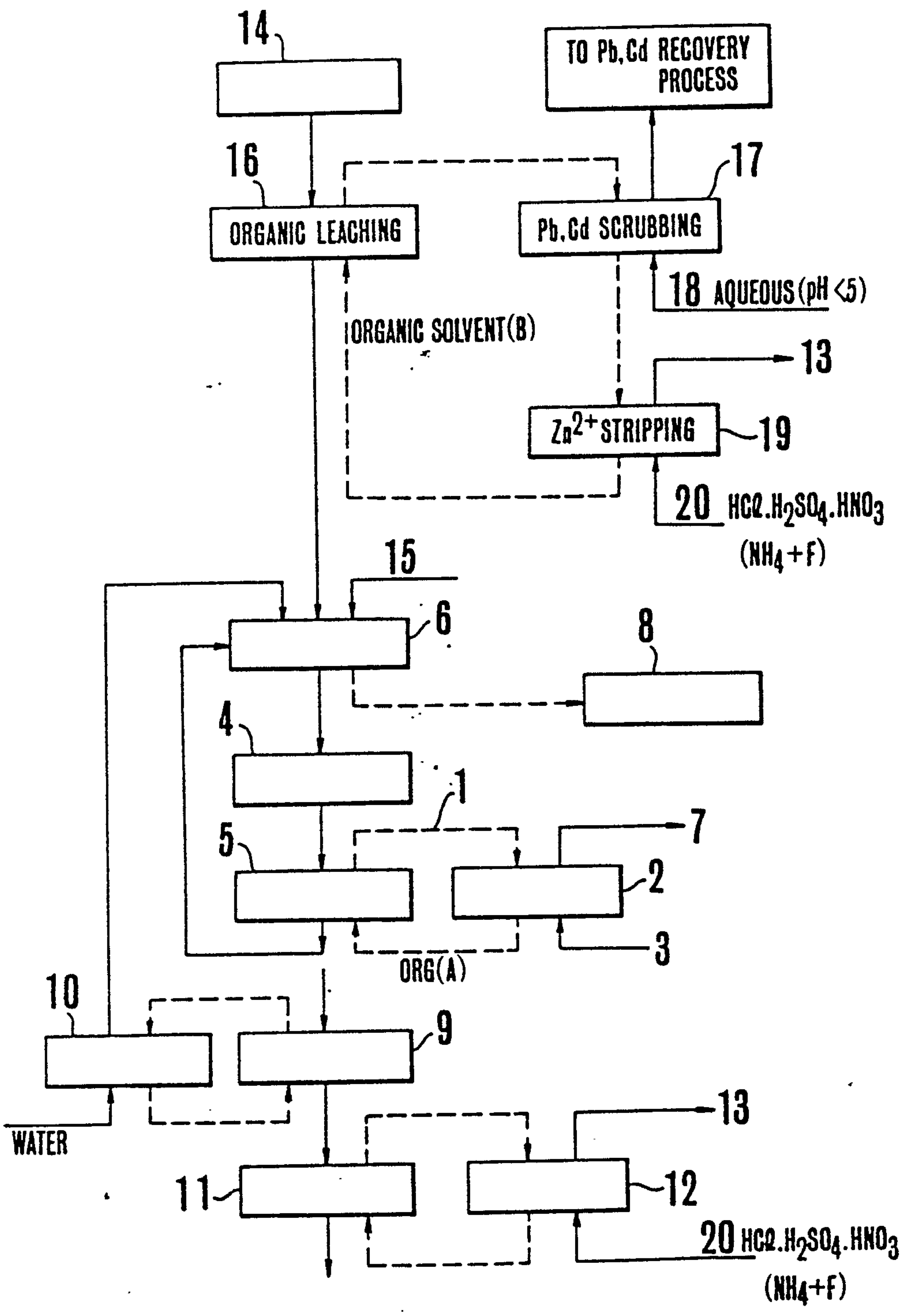
14
TO Pb,Cd RECOVERY PROCESS
16
ORGANIC LEACHING
17
Pb,Cd SCRUBBING
18 AQUEOUS (pH <5)
ORGANIC SOLVENT (B)
13
Zn2+ STRIPPING
19
20 HCl.H2SO4.HNO3 (NH4+F)
15
6
8
4
1
7
5
2
3
ORG (A)
10
9
WATER
13
11
12
20 HCl.H2SO4.HNO3 (NH4+F)

FIG.5

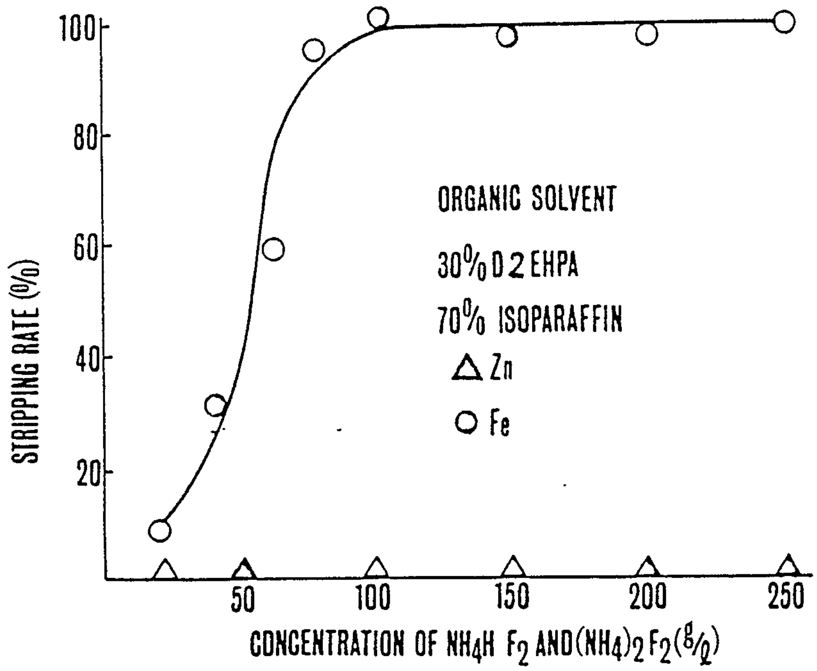
100
80
60
40
20
STRIPPING RATE (%)
50
100
150
200
250
CONCENTRATION OF NH4H F2 AND (NH4)2 F2 (g/l)
ORGANIC SOLVENT
30% D2EHPA
70% ISOPARAFFIN
Zn
Fe

FIG.6

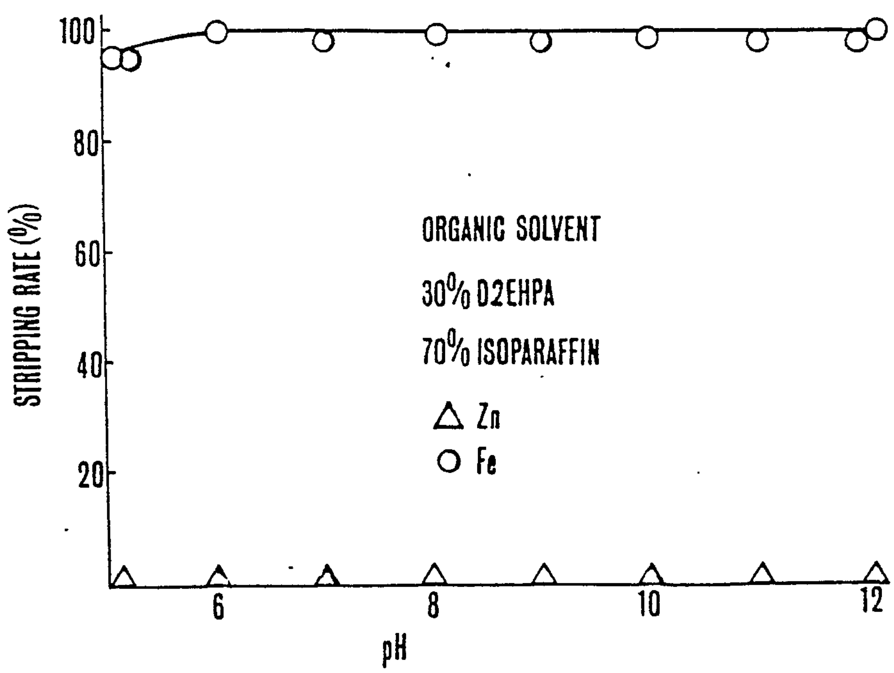
100
80
60
40
20
STRIPPING RATE (%)
6
8
10
12
pH
ORGANIC SOLVENT
30% D2EHPA
70% ISOPARAFFIN
Zn
Fe

FIG.7

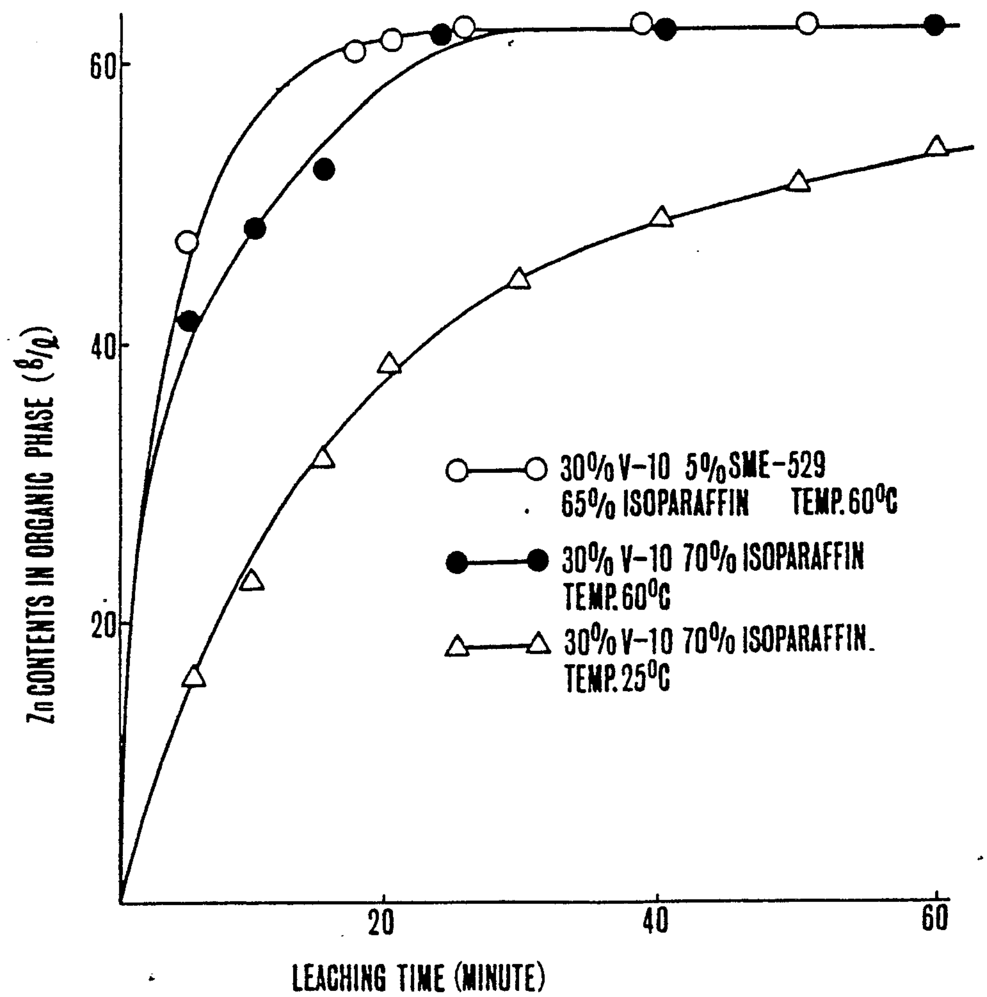
60
40
20
Zn CONTENTS IN ORGANIC PHASE (g/l)
20
40
60
LEACHING TIME (MINUTE)
30% V-10 5% SME-529
65% ISOPARAFFIN TEMP. 60°C
30% V-10 70% ISOPARAFFIN
TEMP. 60°C
30% V-10 70% ISOPARAFFIN.
TEMP. 25°C

FIG.8

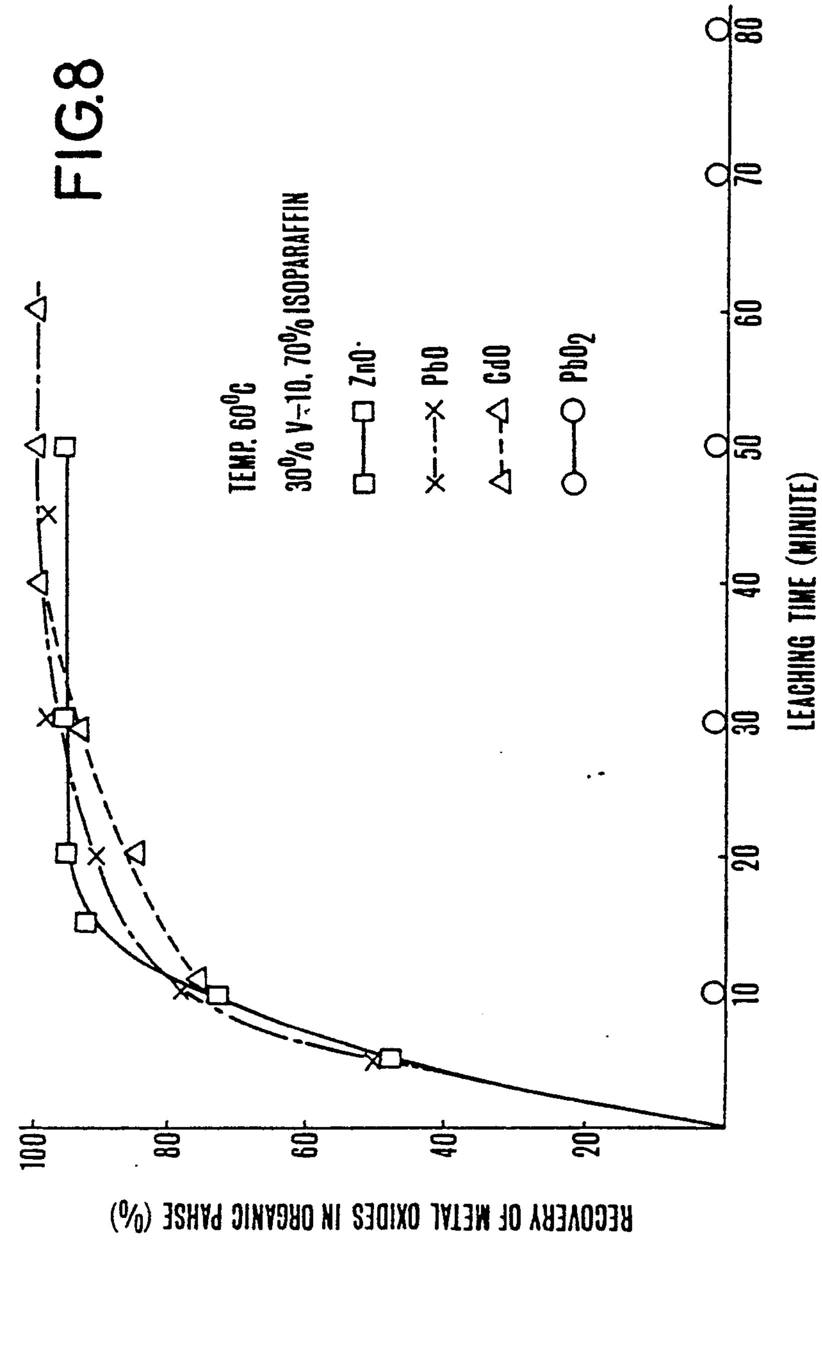
TEMP. 60°C
30% V-10, 70% ISOPARAFFIN
ZnO
PbO
CdO
PbO2
RECOVERY OF METAL OXIDES IN ORGANIC PAHSE (%)
LEACHING TIME (MINUTE)
100
80
60
40
20
10
20
30
40
50
60
70
80

FIG.9

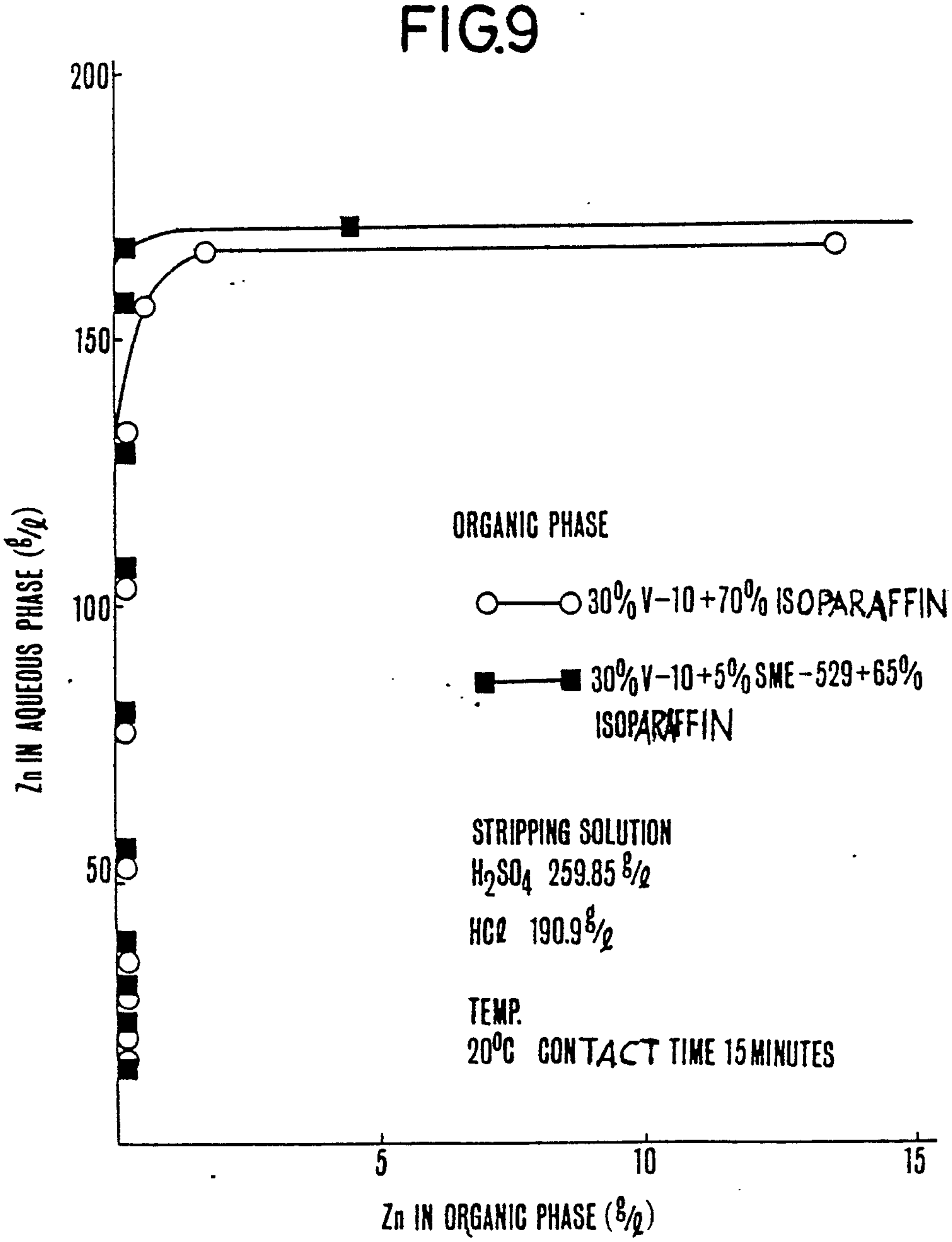
200
150
100
50
Zn IN AQUEOUS PHASE (g/ℓ)
ORGANIC PHASE
30% V-10 + 70% ISOPARAFFIN
30% V-10 + 5% SME-529 + 65% ISOPARAFFIN
STRIPPING SOLUTION
H2SO4 259.85 g/ℓ
HCℓ 190.9 g/ℓ
TEMP.
20°C CONTACT TIME 15 MINUTES
5
10
15
Zn IN ORGANIC PHASE (g/ℓ)

FIG.10

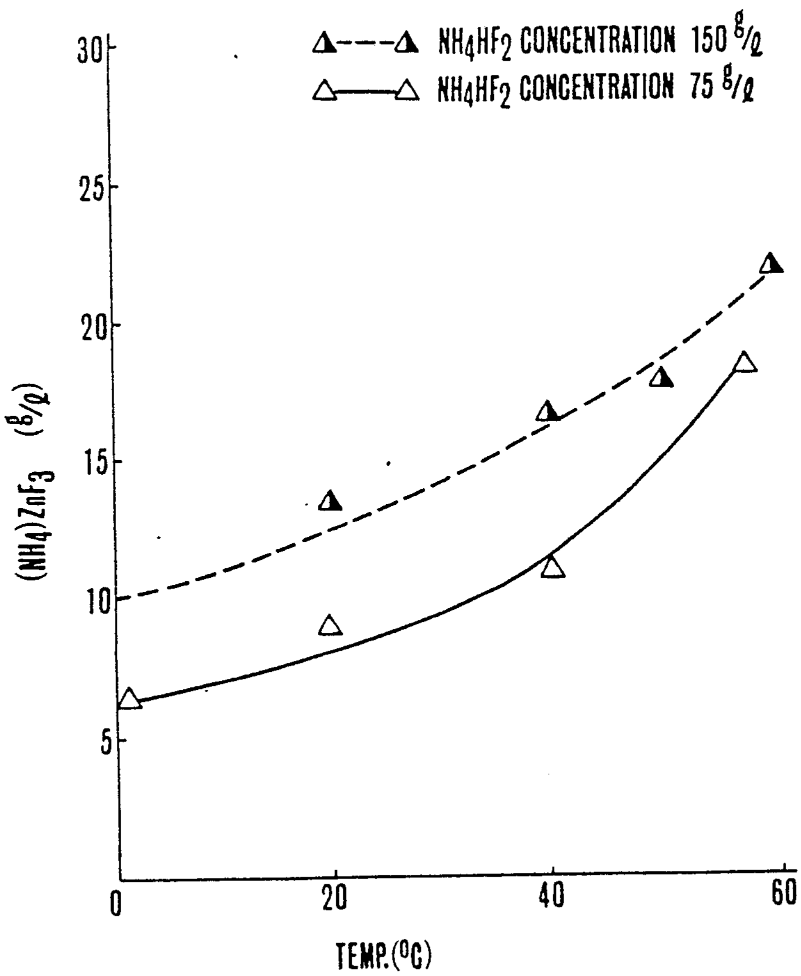
NH4HF2 CONCENTRATION 150 g/l
NH4HF2 CONCENTRATION 75 g/l
(NH4)ZnF3 (g/l)
30
25
20
15
10
5
0
20
40
60
TEMP.(°C)